# EUROPÄISCHE PATENTANMELDUNG

(11) **EP 1 746 472 A1**
(43) Veröffentlichungstag der Anmeldung: **24.01.2007**
(21) Anmeldenummer: 05106405.3
(22) Anmeldetag: 13.07.2005
(51) Int. Cl.: G05B 19/042

(54) **Verfahren und Anordnung zur Generierung einer Anwendungskombination für eine Gebäudeautomationsanlage**

(71) Anmelder: Siemens Schweiz AG, 8047 Zürich (CH)
(72) Erfinder: Fehr, Andreas, 8004, Zürich (CH)
(74) Vertreter: Berg, Peter

(57) **Zusammenfassung**

Ein Verfahren zur Generierung einer Anwendungskombination für eine Gebäudeautomationsanlage umfasst die Verfahrensschritte: Generieren von Funktionsgruppen (40; 41; 42 bis 47), welche wenigstens je zwei durch eine Datenverbindung (50; 51; 52 bis 63) miteinander verbundene technische Funktionen (20; 21; 22 bis 28; 30; 31; 32 bis 38) aufweisen und welche in ihrer Gesamtheit die technischen Funktionen der Anwendungskombination umfassen; Zuordnen einer technischen Funktion (20; 21; 22; 23) an ein der Anwendungskombination zugehöriges Gerät (11), durch welches die technische Funktion (20; 21; 22; 23) ausführbar ist; Zuordnen der Anwendungskombination an ein Raumtemplate (1); und, Generieren eines Templates (88; 110) der Anwendungskombination. Das Verfahren wird vorteilhafterweise durch ein Engineering-Tool durchgeführt und ermöglicht eine vereinfachte Vorbereitung, Installation und Inbetriebnahme von Netzwerken mit verteilten Regler- und Steueranwendungen in einem Gebäude.

## Beschreibung

Die Erfindung bezieht sich auf ein Verfahren sowie eine Anordnung gemäss den Oberbegriffen der Ansprüche 1 und 8.

Solche Verfahren und Anordnungen eignen sich beispielsweise zur Vorbereitung, Installation und Inbetriebnahme von Netzwerken mit verteilten Regler- und Steueranwendungen in einem Gebäude. Derartige Verfahren oder Anordnungen erlauben ein vereinfachtes Netzwerk-Engineering für Gebäudeautomationsanlagen.

Eine Gebäudeautomationsanlage ist eine Anordnung zur Überwachung, Steuerung und/oder Regelung von Prozessgrössen in komplexen technischen Systemen in einem Gebäude, oder in einem mehrere Gebäude umfassenden Areal. Eine Gebäudeautomationsanlage bedient beispielhaft Heizungs-, Lüftungs- und Klimaanlagen, Beleuchtungs- und Beschattungseinrichtungen wie auch Zutritts- , Sicherheits- und Feuerüberwachungssysteme. In der Gebäudeautomationsanlage werden Prozessgrössen - wie beispielsweise Raumklimagrössen oder Ereignisse - erfasst, ausgewertet, überwacht, beeinflusst oder generiert.

In einer Gebäudeautomationsanlage sind in der Regel eine Vielzahl so genannter Feldgeräte wie Sensoren und Aktoren zu bedienen. Typische Feldgeräte einer Gebäudeautomationsanlage sind beispielsweise Temperatur- und Feuchtefühler, Luftqualitätsfühler, Drucksensoren, Durchflussmesser, Elektrizitätszähler, Wärmezähler, Heizwasserventile, Thermostatventile, Lüftungsklappen, Sprinklerventile, Helligkeitsfühler, Brandmelder, Einbruchmelder, Lichtschalter, Chipkartenleser und Leser zur Erfassung biometrische Daten. Nebst den Feldgeräten umfasst eine Gebäudeautomationsanlage in der Regel eine Vielzahl Steuer- und Regelgeräte sowie weitere Geräte, beispielsweise Geräte zur Anbindung der Gebäudeautomationsanlage an externe Kommunikationsnetze, Bildschirme oder Geräte zur Analyse von Videosignalen.

Im weiteren wird in einer Gebäudeautomationsanlage für den Datenaustausch zwischen einzelnen Geräten oder Anlagenteilen ein elektrisches oder drahtloses Kommunikationsmedium benutzt, grundsätzlich sind Kabel, optische Datenkommunikationskanäle, Ultraschallverbindungen, elektromagnetische Nahfelder oder Funknetze einsetzbar, beispielsweise auch ein Glasfasernetz oder ein zellulares Telefonnetz. Für den genannten Datenaustausch einsetzbare Technologien oder Standards sind beispielsweise LON oder LonWorks® der Firma ECHELON, der Europäische Installationsbus EIB, KONNEX, ZigBee oder der nach deutscher Norm DIN 19245 definierte PROFIBUS.

Bekannte Verfahren zur Vorbereitung, Installation und Inbetriebnahme von Netzwerken mit verteilten Regler- und Steueranwendungen in einem Gebäude haben den Nachteil, dass sie arbeitsintensiv und damit auch zu zeitaufwendig sind und insbesondere jeweils nur für einzelne Räume oder Gebäudezonen eines Gebäudes und nicht zonen- oder raumübergreifend durchführbar sind.

Der Erfindung liegt die Aufgabe zu Grunde, ein verbessertes und allgemein einsetzbares Verfahren zur Unterstützung eines Engineering-Prozesses für eine Vorbereitung und Installation von Netzwerken mit verteilten Steuer- und Regelanwendungen in einem Gebäude anzugeben und eine Anordnung zur Durchführung des Verfahrens zu schaffen.

Die genannte Aufgabe wird erfindungsgemäss durch die Merkmale der Ansprüche 1 und 8 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
Fig. 1 eine Anwendungskombination für eine Gebäudeautomationsanlage, und
Fig. 2 ein Template einer Anwendungskombination und Raumzonen eines Gebäudes zugeordnete Instanzen des Templates.

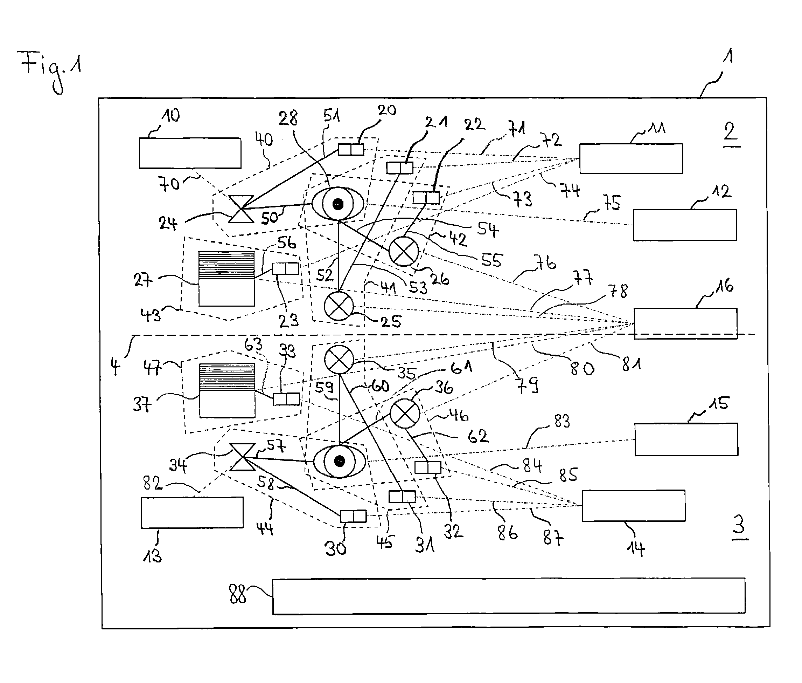

In der Fig. 1 bedeutet 1 ein eine erste Raumzone 2 und eine zweite Raumzone 3 umfassendes Raumtemplate. Die beiden Raumzonen 2 und 3 sind durch eine Trennwand 4 getrennt.

In der ersten Raumzone 2 sind Geräte 10, 11 und 12 einer Gebäudeautomationsanlage angeordnet. Die zweite Raumzone 3 weist Geräte 13, 14 und 15 der Gebäudeautomationsanlage auf. Ein weiteres Gerät 16 ist hier zonenübergreifend, beispielsweise in einem Zwischenboden, in den beiden Raumzonen 2 und 3 angeordnet.

Geräte sind hier typischerweise Feldgeräte, also Sensoren und Aktoren, oder auch Steuer- und Regelgeräte. Die Geräte sind grundsätzlich Hardwareeinheiten, auf denen Anwendungsprogramme lauffähig sind und / oder deren Komponenten von Anwendungsprogrammen bedienbar sind und / oder deren Eigenschaften die Anwendungsprogramme beeinflussen. Die Geräte sind durch Datenkommunikationskanäle in das Gebäudeautomationssystem eingebunden.

Eine Anwendung oder ein Anwendungsprogramm ist Software, durch die eine spezielle technische Funktionalität einer typischerweise universeller einsetzbaren Hardware festgelegt ist.

Im dargestellten Ausführungsbeispiel ist ein erstes Gerät 10, wie auch ein zweites Gerät 13, ein Steuer- und Regelgerät, durch welches eine Raumtemperatur regelbar ist und welches Heizwasserventile und Ventilatorkonvektor steuert. Ein drittes Gerät 11, wie auch ein viertes Gerät 14, ist ein universell einsetzbares, kommunikationsfähiges Bedienungsgerät mit Display und mehreren Tasten. Ein fünftes Gerät 12, wie auch ein sechstes Gerät 15, ist eine Bewegungssensoreinheit. Ein siebtes Gerät 16 ist ein universelles Steuer- und Regelgerät, welches zur Beleuchtungs- und Storensteuerung einsetzbar ist.

Die erste Raumzone 2 ist durch die Gebäudeautomationsanlage mit technischen Funktionen 20, 21, 22, 23, 24, 25, 26, 27 und 28 bedienbar, während die zweite Raumzone 3 durch die Gebäudeautomationsanlage mit technischen Funktionen 30, 31, 32, 33, 34, 35, 36, 37 und 38 bedienbar ist.

Eine technische Funktion ist hier eine Teilaufgabe oder Tätigkeit, welche durch die Gebäudeautomationsanlage selbsttätig gelöst respektive ausgeführt wird. Technische Funktionen sind beispielsweise ein Benutzerinterface, eine Heizungs-, Lüftungs- und Raumklimaregelung, eine Raumbelegungsüberwachung, eine Raumbeleuchtungssteuerung, eine beispielsweise durch Sonnenstoreneinsatz erreichbare Beschattungsregelung, eine Sicherheitsbeleuchtungssteuerung, eine Branderkennungsfunktion, eine Einbruchmeldeeinrichtung, eine Sprinkleraktivität, eine Evakuierungsunterstützungsaktivität oder eine Zutrittskontrolle.

Im dargestellten Ausführungsbeispiel wird die erste Raumzone 2 durch folgende technische Funktionen bedienbar:
eine erstes Benutzerinterface 20 für die Aktivierung einer Heizungs-, Lüftungs- und Raumklimaregelung 24; ein zweites Benutzerinterface 21 für die Aktivierung einer ersten Raumbeleuchtungssteuerung 25; ein drittes Benutzerinterface 22 für die Aktivierung einer zweiten Raumbeleuchtungssteuerung 26; ein viertes Benutzerinterface 23 für die Aktivierung einer Beschattungssteuerung 27; eine Raumbelegungsüberwachung 28.

Die technischen Funktionen in der zweiten Raumzone 3 sind:
ein fünftes Benutzerinterface 30 für die Aktivierung einer weiteren Heizungs-, Lüftungs- und Raumklimaregelung 34; ein sechstes Benutzerinterface 31 für die Aktivierung einer dritten Raumbeleuchtungssteuerung 35; ein siebtes Benutzerinterface 32 für die Aktivierung einer vierten Raumbeleuchtungssteuerung 36; ein achtes Benutzerinterface 33 für die Aktivierung einer weiteren Beschattungssteuerung 37; eine weitere Raumbelegungsüberwachung 28.

Erfindungsgemäss umfasst ein Verfahren zur Erzeugung einer Anwendungskombination die vier nachfolgend aufgeführten Verfahrensschritte:

In einem ersten Verfahrensschritt werden Funktionsgruppen generiert, welche wenigstens je zwei durch eine Datenverbindung miteinander verbundene technische Funktionen aufweisen und welche in ihrer Gesamtheit die technischen Funktionen der Anwendungskombination umfassen.

Mit einer Funktionsgruppe werden sämtliche Datenverbindungen zwischen den technischen Funktionen der Funktionsgruppe und damit das logische Zusammenspiel innerhalb der Funktionsgruppe festgelegt.

Zur Generierung einer Funktionsgruppe sind grundsätzlich zwei verschiedene Verfahrensvarianten durchführbar:

In einer ersten Verfahrensvariante wird eine Funktionsgruppe selbsttätig durch Verbinden von technischen Funktionen generiert, wobei ein Verbinden einer ersten technische Funktion mit einer zweiten technischen Funktion durch Festlegen einer Datenverbindungen zwischen der ersten technischen Funktionen und der zweiten technischen Funktion bewirkt wird. Eine auf diese Art generierte Funktionsgruppe wird vorteilhafterweise auch in einer Funktionsgruppenbibliothek gespeichert.

In einer zweiten Verfahrensvariante wird eine vorbestimmte technische Funktionen und notwendige Datenverbindungen zwischen den technischen Funktionen aufweisende Funktionsgruppe aus der Funktionsgruppenbibliothek ausgewählt.

Vorteilhafterweise ist eine technische Funktion bei Bedarf mehreren technischen Funktionen zuweisbar.

In einem zweiten Verfahrensschritt wird einer technischen Funktion ein Gerät zugeordnet, durch welches die technische Funktion in einem auf dem Gerät lauffähigen Anwendungsprogramm ausführbar ist. Mit einer grundsätzlich raumübergreifend ermöglichten Zuordnung wird auch eine optimale Auslastung der Geräte ermöglicht.

In einem dritten Verfahrensschritt wird die Anwendungskombination einem Raumtemplate zugeordnet, welches wenigstens zwei Raumzonen eines Gebäudes abbildet.

In einem vierten Verfahrensschritt wird ein Template der Anwendungskombination generiert.

Die genannten vier Verfahrensschritte auf die in der Zeichnung dargestellte Situation angewandt, ergibt folgendes Ausführungsbeispiel:

Im ersten Verfahrensschritt werden Funktionsgruppen 40, 41, 42, 43, 44, 45, 46 und 47 generiert. Dazu sind grundsätzlich die oben erwähnten zwei Verfahrensvarianten durchführbar.

In einer ersten Funktionsgruppe 40 werden das erste Benutzerinterface 20, die Heizungs-, Lüftungs- und Raumklimaregelung 24 und die Raumbelegungsüberwachung 28 zusammengefasst. Damit wird eine Gruppierung von logisch zusammengehörigen technischen Funktionen vorgenommen, die schliesslich eine von der aktuellen Raumbelegungssituation abhängige Raumklimaregleranwendung ermögliche kann, bei der beispielsweise die Solltemperatur über eine Benutzerschnittstelle veränderbar ist.

In einer zweiten Funktionsgruppe 41 werden das zweite Benutzerinterface 21, die erste Raumbeleuchtungssteuerung 25 und die Raumbelegungsüberwachung 28 zusammengefasst. In einer dritten Funktionsgruppe 42 werden das dritte Benutzerinterface 22, die zweite Raumbeleuchtungssteuerung 26 und die Raumbelegungsüberwachung 28 zusammengefasst. In einer vierten Funktionsgruppe 43 werden das vierte Benutzerinterface 23 und die Beschattungssteuerung 27 zusammengefasst. Das fünfte Benutzerinterface 30, die weitere Heizungs-, Lüftungs- und Raumklimaregelung 34 und die weitere Raumbelegungsüberwachung 38 werden zu einer fünften Funktionsgruppe 44 zusammengefasst. Das sechste Benutzerinterface 31, die dritte Raumbeleuchtungssteuerung 35 und die weiter Raumbelegungsüberwachung 38 werden zu einer sechsten Funktionsgruppe 45 zusammengefasst. Das siebte Benutzerinterface 32, die vierte Raumbeleuchtungssteuerung 36 und die weitere Raumüberwachung 38 werden zu einer siebten Funktionsgruppe 46 zusammengefasst. Schliesslich werden das achte Benutzerinterface 33 und die weitere Beschattungssteuerung 37 zu einer achten Funktionsgruppe 47 zusammengefasst.

Zur Generierung der Funktionsgruppen werden Datenverbindungen 50, 51, 52, 53, 54, 55, 56, 57, 58, 59, 60, 61, 62 und 63 zur Verbindung von je zwei technischen Funktionen festgelegt, mit dem Zweck, einen funktionsbedingten Datenaustausch zwischen den verbundenen technischen Funktionen zu ermöglichen.

Die Heizungs-, Lüftungs- und Raumklimaregelung 24 wird über eine erste Datenverbindung 50 mit der Raumüberwachung 28 und über eine zweite Datenverbindung 51 mit dem ersten Benutzerinterface 20 verbunden. Durch die beiden Datenverbindungen 50 und 51 sind innerhalb der ersten Funktionsgruppe 40 Daten austauschbar.

Die erste Raumbeleuchtungssteuerung 25 wird über eine dritte Datenverbindung 52 mit der Raumüberwachung 28 und über eine vierte Datenverbindung 53 mit dem zweiten Benutzerinterface 21 verbunden. In gleicher Weise werden zwischen der zweiten Raumbeleuchtungssteuerung 26 und der Raumüberwachung 28 eine fünfte Datenverbindung 54 und zwischen der zweiten Raumbeleuchtungssteuerung 26 und dem dritten Benutzerinterface 22 eine sechste Datenverbindung 55 festgelegt. Die Beschattungssteuerung 27 und das vierte Benutzerinterface 23 werden durch Festlegen einer siebten Datenverbindung 56 miteinander verbunden.

Die weitere Heizungs-, Lüftungs- und Raumklimaregelung 34 wird über eine achte Datenverbindung 57 mit der weiteren Raumüberwachung 38 und über eine neunte Datenverbindung 58 mit dem fünften Benutzerinterface 30 verbunden. Durch die beiden Datenverbindungen 57 und 58 sind innerhalb der fünften Funktionsgruppe 44 Daten austauschbar.

Die dritte Raumbeleuchtungssteuerung 35 wird über eine zehnte Datenverbindung 59 mit der weiteren Raumüberwachung 38 und über eine elfte Datenverbindung 60 mit dem sechsten Benutzerinterface 31 verbunden. In gleicher Weise werden zwischen der vierten Raumbeleuchtungssteuerung 36 und der weiteren Raumüberwachung 38 eine zwölfte Datenverbindung 61 und zwischen der vierten Raumbeleuchtungssteuerung 36 und dem siebten Benutzerinterface 32 eine dreizehnte Datenverbindung 62 festgelegt. Die weitere Beschattungssteuerung 37 und das achte Benutzerinterface 33 werden durch Festlegen einer vierzehnten Datenverbindung 63 miteinander verbunden.

Im zweiten Verfahrensschritt werden Zuordnungen 70, 71 bis 87 durchgeführt, durch welche technische Funktionen an Geräte gebunden werden, durch welche die zugeordneten technischen Funktionen ausgeführt werden.

Eine erste Zuordnung 70 bindet die Heizungs-, Lüftungs- und Klimaregelung 24 an das erste Gerät 10. Das zweite Gerät 11 ist über eine zweite Zuordnung 71 an das erste Benutzerinterface 20, durch eine dritte Zuordnung 72 an das zweite Benutzerinterface 21, eine vierte Zuordnung 73 an das dritte Benutzerinterface 22 und eine fünfte Zuordnung 74 an das vierte Benutzerinterface 23 gebunden. Eine sechste Zuordnung 75 bindet die Raumüberwachung 28 an das dritte Gerät 12. Das siebte Gerät 16 ist durch eine siebte Zuordnung 76 die zweite Raumbeleuchtungssteuerung 26, durch eine achte Zuordnung 77 an die Beschattungssteuerung 27, durch eine neunte Zuordnung 78 an die erste Raumbeleuchtungssteuerung 25, eine zehnte Zuordnung 79 an dritte Raumbeleuchtungssteuerung 35, eine elfte Zuordnung 80 an die weitere Beschattungssteuerung 37 und schliesslich durch eine zwölfte Zuordnung 81 an die vierte Raumbeleuchtungssteuerung 36 gebunden. Eine dreizehnte Zuordnung 82 bindet die weitere Heizungs-, Lüftungs- und Klimaregelung 34 an das vierte Gerät 13. Eine vierzehnte Zuordnung 83 bindet die weitere Raumüberwachung 15 an das sechste Gerät 15. Das fünfte Gerät 14 ist über eine fünfzehnte Zuordnung 84 an das achte Benutzerinterface 33, durch eine sechzehnte Zuordnung 85 an das siebte Benutzerinterface 32, eine siebzehnte Zuordnung 86 an das sechste Benutzerinterface 31 und eine achtzehnte Zuordnung 87 an das fünfte Benutzerinterface 30 gebunden.

Ein Anwendungsprogramm eines Geräts führt jeweils alle dem Gerät zugeordneten technischen Funktionen aus. Das auf dem Gerät lauffähige Anwendungsprogramm wird damit durch die Gesamtheit der dem Gerät zugeordneten technischen Funktionen beschrieben.

Das Anwendungsprogramm des siebten Geräts 16 beispielsweise, führt die vier dem Gerät 16 zugeordneten Raumbeleuchtungssteuerungen 25, 26, 35 und 36 und ausserdem die beiden Beschattungssteuerungen 27 und 37 durch.

Das Anwendungsprogramm des fünften Geräts 12, um ein weiteres Beispiel anzugeben, führt einzig die dem fünften Gerät 12 zugeordnete Raumbelegungsüberwachung 28 aus.

Im dritten Verfahrensschritt wird die Anwendungskombination dem Raumtemplate 1 zugeordnet.

Das Raumtemplate 1 ist eine Schablone für eine zwei Raumzonen beinhaltende Gebäudezone. Typischerweise widerspiegelt das Raumtemplate 1 einen Teilraum eines gewissen Gebäudes, der im betreffenden Gebäude mehrfach vorkommt. Das Raumtemplate 1 widerspiegelt beispielsweise eine zwei Büroarbeitsplätze umfassende Gebäudezone an der Süd- oder der Ostfront des Gebäudes, wobei in der dem Template 1 zugeordneten Anwendungskombination die an der Süd- und Ostfront zu erwartenden Einflüsse, wie beispielsweise Wärme- und Lichteinstrahlung, berücksichtig sind. Das Raumtemplate 1 ist damit für mehrere gleichartige Teilräume des Gebäudes benutzbar.

Im vierten Verfahrensschritt, also bei der Generierung des Templates für die in den Verfahrensschritten eins, zwei und drei generierte Anwendungskombination, wird der Anwendungskombination mit Vorteil auch eine Identifikation 88 zugeordnet.

Das Template der Anwendungskombination ist eine Schablone zur Generierung von Instanzen der Anwendungskombination für eine dem Raumtemplate 1 entsprechende Gebäudezone.

Ein allfällig notwendige Änderung der Anwendungskombination ist vorteilhafterweise durch ein einmaliges Verändern des Templates der Anwendungskombination durchführbar, womit auch alle vorhandenen Instanzen durch einen Vererbungsmechanismus selbsttätig dem Template angleichbar sind.

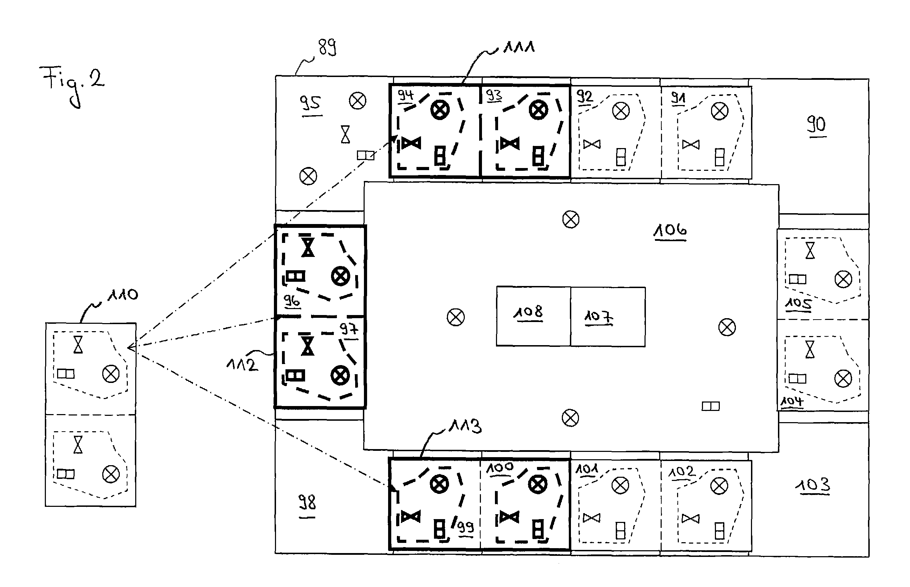

In der Fig. 2 ist mit 89 ein Stockwerk eines Gebäudes bezeichnet, das Raumzonen 90, 91, 92 bis 108 aufweist. Zu einem Template 110 einer weiteren Anwendungskombination sind eine erste Instanz 111, eine zweite Instanz 112 und eine dritte Instanz 113 generiert worden. Die erste Instanz 111 ist entsprechend dem Raumtemplate der Anwendungskombination einer Raumzone 93 und einer Raumzone 94 zugeordnet. In gleicher Weise ist die zweite Instanz 112 einer Raumzone 96 und einer Raumzone 97, und die dritte Instanz 113 einer Raumzone 99 und einer Raumzone 100 zugeordnet.

Nach einem Verändern des Templates 110, beispielsweise nach einem Austauschen einer technischen Funktion, sind auch die drei Instanzen 111, 112 und 113 mittels Vererbungsmechanismus selbsttätig dem Template angleichbar.

Das vorgeschlagene Verfahren zur Generierung einer mehrere Geräte und auch mehrere technische Funktionen umfassenden Anwendungskombination wird mit Vorteil als computerunterstütztes interaktives Engineering-Werkzeug implementiert. Das nach dem vorgeschlagenen Verfahren arbeitende Engineering-Werkzeug ermöglicht eine selbsttätig überprüfbare Auslegung, Installation und Inbetriebnahme von Netzwerken mit verteilten Regler- und Steueranwendungen für Gebäudeautomationsanlagen.

Das Engineering-Werkzeug weist vorteilhafterweise eine ein Ein-Ausgabegerät aufweisende Mikrocomputereinheit - beispielsweise ein Personalcomputer ― auf, die derart programmiert ist, dass eine Raumaufteilung eines Gebäudes und auch im Gebäude angeordnete Geräte einer Gebäudeautomationsanlage, wie Sensoren, Aktoren, Steuer- und Regelgeräte, darstellbar sind. Das Engineering-Werkzeug verfügt über Software zum Erstellen einer mehrere Geräte und auch mehrere Funktionen umfassenden Anwendungskombination der Gebäudeautomationsanlage, mit den Verfahrensschritten:
- Generieren von Funktionsgruppen, welche wenigstens je zwei durch eine Datenverbindung miteinander verbundene technische Funktionen aufweisen und welche in ihrer Gesamtheit die technischen Funktionen der Anwendungskombination umfassen,
- Zuordnen einer technischen Funktion an ein Gerät, durch welches die technische Funktion ausführbar ist,
- Zuordnen der Anwendungskombination an ein wenigstens zwei Raumzonen aufweisendes Raumtemplate, und,
- Generieren eines Templates der Anwendungskombination.

## Patentansprüche

1. Verfahren zur Generierung einer mehrere Geräte und auch mehrere technische Funktionen umfassende Anwendungskombination für eine Gebäudeautomationsanlage, **gekennzeichnet durch** die Verfahrensschritte:
- Generieren von Funktionsgruppen (40; 41; 42 bis 47), welche wenigstens je zwei **durch** eine Datenverbindung (50; 51; 52 bis 63) miteinander verbundene technische Funktionen (20; 21; 22 bis 28; 30; 31; 32 bis 38) aufweisen und welche in ihrer Gesamtheit die technischen Funktionen der Anwendungskombination umfassen,
- Zuordnen einer technischen Funktion (20; 21; 22; 23) an ein der Anwendungskombination zugehöriges Gerät (11), **durch** welches die technische Funktion (20; 21; 22; 23) ausführbar ist,
- Zuordnen der Anwendungskombination an ein wenigstens zwei Raumzonen (2; 3) abbildendes Raumtemplate (1), und,
- Generieren eines Templates (88; 110) der Anwendungskombination.

2. Verfahren nach Anspruch 1, **dadurch gekennzeichnet,**
**dass** eine Funktionsgruppe (43) durch Verbinden von technischen Funktionen (23; 27) generiert wird, wobei ein Verbinden einer ersten technische Funktion (23) mit einer zweiten technischen Funktion (27) durch Festlegen einer Datenverbindungen (56) zwischen der ersten technischen Funktionen (23) und der zweiten technischen Funktion (27) bewirkt wird.

3. Verfahren nach Anspruch 1, **dadurch gekennzeichnet,**
**dass** eine vorbestimmte technische Funktionen (37; 33) und notwendige Datenverbindungen (63) zwischen den technischen Funktionen aufweisende Funktionsgruppe (47) aus einer Funktionsgruppenbibliothek ausgewählt wird.

4. Verfahren nach einem vorangehenden Anspruch, **dadurch gekennzeichnet, dass** eine technische Funktion (28) mehreren Funktionsgruppen (40; 41; 42) zugeordnet wird.

5. Verfahren nach einem vorangehenden Anspruch, **dadurch gekennzeichnet, dass** einem Gerät (11) mehrere technische Funktionen (20; 21; 22 ; 23) zugeordnet werden.

6. Verfahren nach einem vorangehenden Anspruch, **gekennzeichnet durch** einen weiteren Verfahrensschritt zum Generieren einer Instanz (111; 112; 113) der Anwendungskombination (110) für eine dem Raumtemplate (1) entsprechende Gebäudezone (93, 94; 96, 97; 99, 100).

7. Verfahren nach Anspruch 6, **gekennzeichnet durch** einen weiteren Verfahrensschritt zum Verändern des Templates (110) der Anwendungskombination, wobei nach der Durchführung der Veränderung vorhandene Instanzen (111; 112; 113) des Templates (110) **durch** Vererbung angeglichen werden.

8. Anordnung mit einer ein Ein-Ausgabegerät aufweisenden Mikrocomputereinheit, die derart programmiert ist, dass eine Raumaufteilung eines Gebäudes und auch im Gebäude angeordnete Geräte einer Gebäudeautomationsanlage, wie Sensoren, Aktoren, Steuer- und Regelgeräte, darstellbar sind,
**gekennzeichnet durch** Mittel zum Erstellen einer mehrere Geräte (10; 11; 12; 13; 14; 15; 16) und auch mehrere technische Funktionen (20, 21, 22 bis 28, 30, 31 32 bis 38) umfassenden Anwendungskombination der Gebäudeautomationsanlage, mit den Verfahrensschritten:
- Generieren von Funktionsgruppen, welche wenigstens je zwei **durch** eine Datenverbindung miteinander verbundene technische Funktionen aufweisen und welche in ihrer Gesamtheit die technischen Funktionen der Anwendungskombination umfassen,
- Zuordnen einer technischen Funktion an ein Gerät, **durch** welches die technische Funktion ausführbar ist,
- Zuordnen der Anwendungskombination an ein wenigstens zwei Raumzonen (2; 3) aufweisendes Raumtemplate (1), und,
- Generieren eines Templates (88; 110) der Anwendungskombination.

9. Anordnung nach Anspruch 8, **gekennzeichnet durch** Mittel zum Generieren einer Instanz (111; 112; 113) der Anwendungskombination für eine dem Raumtemplate entsprechende Gebäudezone (93, 94; 96, 97; 99, 100).

10. Anordnung nach Anspruch 8, **gekennzeichnet durch** Mittel zum Verändern des Templates (110) der Anwendungskombination.

11. Anordnung nach Anspruch 10, **gekennzeichnet durch** Mittel zum Verändern von Instanzen (111; 112; 113) des veränderten Templates (110) entsprechend dem veränderten Template.
